# EUROPÄISCHE PATENTSCHRIFT

(11) **EP 0 362 793 B1**
(45) Veröffentlichungstag und Bekanntmachung des Hinweises auf die Patenterteilung: **19.07.1995**
(21) Anmeldenummer: 89118327.9
(22) Anmeldetag: 03.10.1989
(51) Int. Cl.: C12C 7/14

(54) **Verfahren zum Betreiben einer Aufhackvorrichtung in einem Läuterbottich bei der Biererzeugung**
Process for operating a raking device in a clarifying vat for use in beer making
Procédé de commande d'un dispositif de piochage de drêches à l'intérieur d'une cuve-filtre pour la fabrication de la bière

(30) Priorität: 07.10.1988 DE 3834207; 30.12.1988 DE 3844389
(43) Veröffentlichungstag der Anmeldung: 11.04.1990
(73) Patentinhaber: Anton Steinecker Maschinenfabrik GmbH, D-85318 Freising (DE)
(72) Erfinder: Stippler, Kurt, Dipl.Ing.Dr., D-8051 Marzling (DE); Wasmuht, Klaus, D-8836 Ellingen (DE); Maitner, Wolfgang, D-8050 Freising (DE)
(74) Vertreter: Grünecker, Kinkeldey, Stockmair & Schwanhäusser Anwaltssozietät

(56) Entgegenhaltungen:
- DD-A- 139 480
- DE-A- 3 333 419
- FR-A- 2 125 780
- GB-A- 2 144 449
- US-A- 2 782 013
- US-A- 2 948 661
- MASTER BREWERS ASSOCIATION OF THE AMERICAS; Band 25, Nr. 2, 1988; Seiten 54-61#

## Beschreibung

Die Erfindung betrifft ein Verfahren zum Betreiben einer Aufhackvorrichtung in einem Läuterbottich bei der Biererzeugung, bei welchem die umlaufende Aufhackvorrichtung gesteuert angehoben bzw. abgesenkt wird.

Ein solches Anheben bzw. Absenken der Aufhackvorrichtung dient dem Zweck, die zu der Aufhackvorrichtung gehörenden Aufhackmesser auf unterschiedlichem Niveau in der im Läuterbottich befindlichen Treberschicht umlaufen zu lassen.

Ein gattungsgemäßes Verfahren ist bereits aus der DD-PS 139 480 bekannt.

Ein Nachteil des bekannten Verfahrens ist darin zu sehen, daß beim Umlaufen der Aufhackvorrichtung in ihrer untersten Stellung Aufhackvorgänge im Tiefschnitt erfolgen, die eine Verschlechterung der Würzequalität zur Folge haben, da die Trübungswerte nach oben schnellen und sich diese hohen Trübungswerte nur relativ langsam wieder abbauen. Das Einleiten des Tiefschnittes erfolgt bei dem bekannten Verfahren automatisch bei Überschreiten eines vorgegebenen Differenzdruckes. Wird der vorgegebene Differenzdruck überschritten, so wird die Aufhackvorrichtung automatisch für eine vorgegebene Zeitdauer auf Tiefschnitt umgesteuert. Dabei muß während der Zeitdauer eines jeden Tiefschnittes der Läutervorgang unterbrochen werden, was zu einer unerwünschten Verlängerung der Läuterbottich-Belegzeit führt.

Eine solche Verlängerung der Läuterbottich-Belegzeit als Folge von Tiefschnitten ist der Zeitschrift "Brauwelt" 1988, S. 2341, Abb. 4 zu entnehmen. Dieses Schaubild zeigt graphisch über die Zeit aufgetragen den Ablauf eines Läuterverfahrens nach dem derzeit modernsten Stand der Technik. Bei diesem Läuterverfahren erfolgt das Aufhacken nach einem vorgegebenen Programm in verschiedenen Höhenpositionen der Aufhackvorrichtung. Wie der Abb. 4 zu entnehmen ist, wird jedesmal, wenn der Treberwiderstand, d.h. der Differenzdruck, im Bereich des Läuterbottichbodens zu groß wird, ein Tiefschnitt durchgeführt. Für die Zeitdauer eines jeden Tiefschnittes zeigt in dem Schaubild die die Gesamtabläutermenge bezeichnende Kurve einen Haltepunkt (Knick).

Aus "MASTER BREWERS ASSOCIATION OF THE AMERICAS", Bd. 25, Nr. 2, 1988, Seiten 54-61, ist ein Verfahren bekannt, bei dem die Aufhackvorrichtung, ausgehend von einer Höhe von ca. 20 cm, in festen automatisch einstellbaren Werten, z.B. mm/min, abgesenkt und nach Erreichen eines untersten Wertes wieder in einem Zuge nach oben angehoben wird, worauf der Aufhackvorgang in der gleichen Weise fortgesetzt wird.

Der Erfindung liegt die Aufgabe zugrunde, ein gattungsgemäßes Verfahren so auszugestalten, daß das Abläutern in vier wesentlichen Kriterien, mämlich Läuterzeit, Blankheit der Würze und damit einhergehend minimaler Trübstoffgehalt, Ausbeute und Glattwasseranfall verbessert wird. Insbesondere sollen Aufhackvorgänge im Tiefschnitt vermieden werden. Gleichzeitig ist angestrebt, den Glattwasseranfall so gering wie möglich zu halten und dennoch ein optimales Auswaschen des Treberkuchens bei der Läuterung zu gewährleisten.

Diese Aufgabe wird durch die im Anspruch 1 angegebene Erfindung gelöst.

Der mit Hilfe der Erfindung erzielbare technische Fortschritt ergibt sich in erster Linie daraus, daß die Steuerung der Höhenbewegungen bzw. der Höhenposition der umlaufenden Aufhackvorrichtung in Abhängigkeit vom Geschehen im Läuterbottich gesteuert wird. Ferner wird mit Hilfe des erfindungsgemäßen Verfahrens der Treberkuchen optimal ausgewaschen, aber trotzdem der Glattwasseranfall gering gehalten.

Beim Ausführen des erfindungsgemäßen Verfahres verbleibt die Aufhackvorrichtung zunächst in einer aufgrund von Betriebserfahrungen gewählten Ausgangsstellung, in welcher die Aufhackmesser im oberen Drittel der Treberschicht arbeiten. Kommt es zu einer Verschlechterung im Ablauf des Läutervorganges, so wird beim Verfahren nach der Erfindung die Höhenposition der Aufhackvorrichtung automatisch so eingeregelt, daß der Läutervorgang wieder optimal abläuft.

Vorteilhafterweise erfolgt die automatische Regelung des Anhebens bzw. Absenkens der Aufhackvorrichtung in Abhängigkeit vom Durchfluß der Läuterwürze durch den Würzeablauf.

Anstelle einer solchen durchflußabhängigen Regelung der Aufhackvorrichtung kann das Anheben bzw. Absenken der Aufhackvorrichtung automatisch differenzdruckabhängig, also in Abhängigkeit vom Treberwiderstand geregelt werden.

Dabei werden die automatische durchflußabhängige Regelung bzw. die automatische differenzdruckabhängige Regelung der Aufhackvorrichtung vorzugsweise rechnergestützt durchgeführt.

Es hat sich als vorteilhaft herausgestellt, daß beim Anheben bzw. Absenken der Aufhackvorrichtung zusätzlich auch die Umfangsgeschwindigkeit der Aufhackvorrichtung automatisch und rechnergestützt geregelt wird. Dabei ist besonders bevorzugt, daß die Aufhackvorrichtung beim Absenken mit gesteigerter Umfangsgeschwindigkeit gefahren wird und daß die Aufhackvorrichtung beim Anheben mit herabgesetzter Umfangsgeschwindigkeit gefahren wird. Vorteilhafterweise wird nach Erreichen eines maximalen (optimalen) Durchflusses die Umfangsgeschwindigkeit der Aufhackvorrichtung in Abhängigkeit von den ermittelten Trübungswerten so lange herabgesetzt, bis durch weiteres Vermindern der Umfangsgeschwindigkeit keine Verbesserung der Trübungswerte mehr erreicht werden kann.

Vorzugweise wird ferner beim Erreichen eines maximalen Durchflusses und einer minimalen Trübung die Umfangsgeschwindigkeit der Aufhackvorrichtung soweit herabgesetzt, wie ohne Beeinträchtigung der Durchfluß- und Trübungswerte möglich. Vorteilhafterweise wird nach einem solchen Herabsetzen der Umfangsgeschwindigkeit die Aufhackvorrichtung soweit wie möglich wieder angehoben, soweit dieses ohne Beeinträchtigung der Durchfluß- und Trübungswerte möglich ist. Das nach einer vorteilhaften Ausgestaltung des erfindungsgemäßen Verfahrens mit dem Anheben bzw. Absenken der Aufhackvorrichtung einhergehende Regeln der Umfangsgeschwindigkeit der Aufhackvorrichtung erfolgt automatisch und rechnergestützt.

Die Erfindung wird im folgenden anhand von Ausführungsbeispielen und unter Bezug auf die zeichnung näher beschrieben. Es zeigt:
Fig. 1 ein Fließschema zur Erläuterung einer ersten Ausführungsform des erfindungsgemäßen Verfahrens,
Fig. 2 ein Fließschema zur Erläuterung einer zweiten Ausführungsform des erfindungsgmäßen Verfahrens und
Fig. 3 Läuterkurven eines nach dem erfindungsgemäßen Verfahrens arbeitenden Sudwerkes.

Der Aufbau und die Arbeitsweise von Läuterbottichen für die Biererzeugung sind soweit bekannt, daß von einer eingehenden Beschreibung abgesehen wird. Der prinzipielle Aufbau und Betrieb einer im Läuterbottich vorgesehenen Aufhackmaschine sind gleichfalls so gut bekannt, daß eine Beschreibung von Einzelheiten entbehrlich ist.

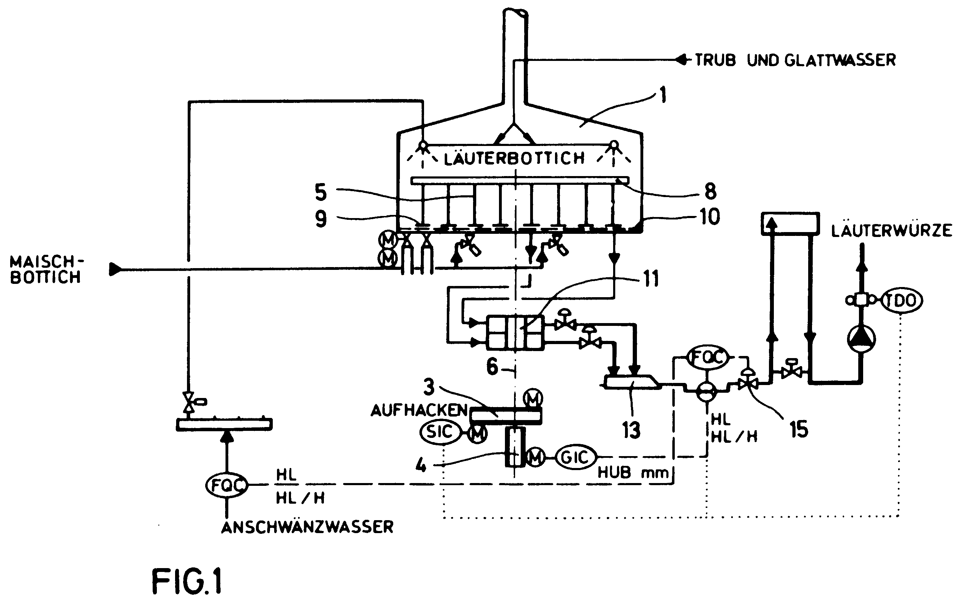

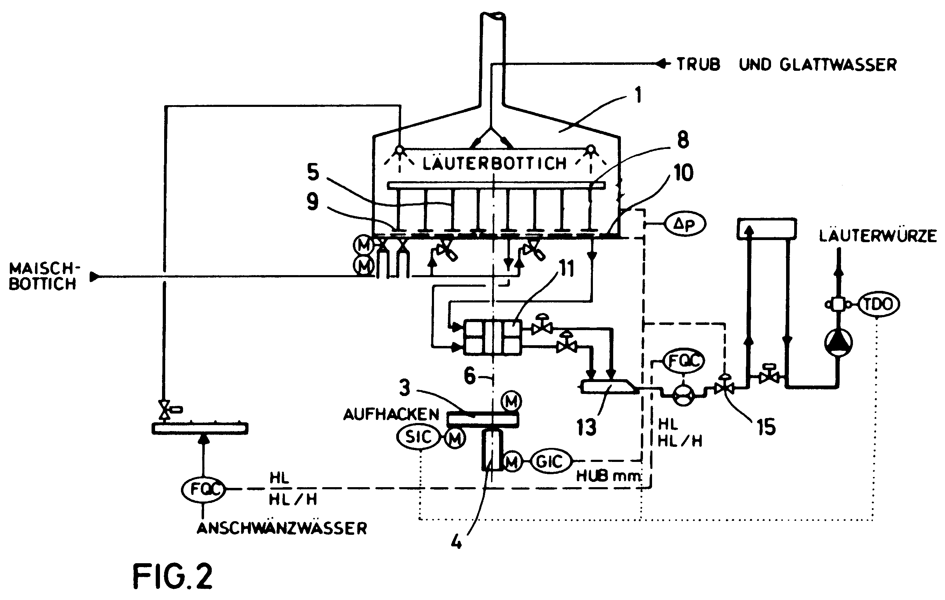

In den Figuren 1 und 2 ist mit 1 ein Läuterbottich bezeichnet, der auf einer nichtdargestellten Tragvorrichtung angeordnet ist, um unter dem Boden des Läuterbottichs Einbauplatz für eine Antriebsvorrichtung 3 sowie für eine Hub- und Senkvorrichtung 4 für die innerhalb des Läuterbottichs 1 angeordnete Aufhackvorrichtung 5 zu schaffen.

Die Aufhackvorrichtung 5 weist eine Antriebswelle 6 auf, welche drehbeweglich sowie axial verschieblich gelagert ist. Am oberen Endabschnitt der Antriebswelle 6 sind in Umfangsrichtung in gleichem Abstand voneinander mehrere Horizontalarme 8 befestigt, die jeweils eine Reihe von Aufhackmessern 9 für die Treberschicht tragen, welche sich beim Läutervorgang als Rückstand auf dem Senkboden 10 des Läuterbottichs 1 absetzt.

Die Antriebswelle 6 der Aufhackvorrichtung 5 steht mit ihrem unteren Endabschnitt im Eingriff mit der Antriebseinrichtung 3 sowie mit der Hub- und Senkvorrichtung 4.

Wenn die auf dem Senkboden 10 abgesetzte Treberschicht aufgelockert werden soll, so wird die Antriebseinrichtung 3 eingeschaltet, um die Antriebswelle 6 und folglich die Arme 8 mit ihren Aufhackmessern 9 in eine Drehung zu versetzen. Zum Anheben bzw. Absenken der Aufhackvorrichtung 5 wird die Hub- und Senkvorrichtung 4 betätigt, welche die Antriebswelle 6 und folglich die Arme 8 mit ihren Aufhackmessern 9 anhebt bzw. absenkt.

Die aus dem Läuterbottich 1 abgezogene Läuterwürze gelangt in einen Sammeltopf 11 und von diesem in ein Zentralrohr 13, welchem eine integrierende Durchflußanzeige FQC sowie ein Regelventil 15 nachgeschaltet sind. Mit Hilfe der Durchflußanzeige FQC werden die Gesamtabläutermenge (hl) sowie der Durchfluß (hl/h) gemessen. In Flußrichtung hinter dem Regelventil 15 wird mittels einer Trübung-Meßeinrichtung TDO die Trübung (EBC) der Läuterwürze gemessen.

Als Antriebsmaschinen M sind sowohl in der Antriebsvorrichtung 3 der Aufhackvorrichtung als auch in der Hub- und Senkvorrichtung 4 der Aufhackvorrichtung vorzugsweise frequenzgeregelte Elektromotoren vorgesehen, da diese in einem weiten Drehzahlbereich steuerbar sind. Es kann jedoch auch für eine stufenlose Hubverstellung ein Hydraulikaggregat eingesetzt werden.

Fig. 1 erläutert die automatische Regelung des Betriebes der Aufhackvorrichtung in Abhängigkeit vom Durchfluß, wohingegen Fig. 2 die automatische Regelung des Betriebes der Aufhackvorrichtung in Abhängigkeit vom Differenzdruck, also in Abhängigkeit vom Treberwiderstand, erläutert.

Die vorstehend beschriebenen Grundelemente eines Läuterbottichs mit Aufhackvorrichtung sind dem Fachmann vertraut.

Bei der Durchführung des erfindungsgemäßen Verfahrens wird der Ablauf bzw. der Fortschritt des Läutervorganges fortwährend oder in geeigneten Intervallen automatisch überwacht und werden in Abhängigkeit von dem Ergebnis dieser Überwachung Steuerbefehle an die Antriebseinrichtungen der Hub- und Senkvorrichtung der Aufhackvorrichtung derart gegeben, daß die Aufhackvorrichtung in Vertikalrichtung in eine veränderte Position gefahren wird, welche einen optimalen Ablauf des Läuterprozesses gewährleistet, sofern bei der Überwachung ermittelt wurde, daß die Istwerte des Durchflusses bzw. des Differenzdruckes von entsprechenden Vorgaben (Sollwerte) abweicht.

Auf diese Weise wird beispielsweise bei Abweichungen in der Beschaffenheit der Maische durch Änderung der Höhenposition der Aufhackvorrichtung schnell auf diese Änderung von Gegebenheiten im Läuterbottich reagiert.

Die beiden bevorzugten Ausgangsgrößen für das erfindungsgemäße Verfahren sind, wie bereits erwähnt, der mittels der Durchflußanzeige FQC gewonnene Durchfluß der Läuterwürze vom Läuterbottich durch den Würzeablauf in das nichtdargestellte Vorlaufgefäß sowie, nach einer zweiten Ausführungsform der Erfindung, der Treberwiderstand, also der Differenzdruck im Bereich des Läuterbottich-Senkbodens 10.

Der Differenzdruck Δp wird, wie in Fig. 2 schematisch dargestellt, aus Messungen seitlich in der Treberschicht sowie unterhalb des Senkbodens gewonnen.

Wie in Fig. 1 (durchflußabhängige Regelung) dargestellt, verläuft von der Durchflußanzeige FQC ein erster, gestrichelt dargestellter Regelkreis zur Stellungsanzeige GIC der Hub- und Senkvorrichtung 4. Mit Hilfe dieses ersten, gestrichelt dargestellten Regelkreises wird das Anheben bzw. Absenken der Aufhackvorrichtung in Abhängigkeit vom Durchfluß der Läuterwürze durch die Durchflußanzeige FQC automatisch gesteuert. Diese automatische Steuerung erfolgt vorzugsweise rechnergestützt.

Wie Fig. 1 ferner zu entnehmen, erstreckt sich bei der durchflußabhängigen Regelung ein zweiter, punktiert dargestellter Regelkreis von der Durchflußanzeige FQC zu der Drehzahlregelung SIC (Frequenzumformer) der Antriebsmaschine der Antriebsvorrichtung 3 für die Aufhackvorrichtung 5. Mit Hilfe dieses punktiert dargestellten zweiten Regelkreises FQC-SIC kann nach einer bevorzugten Ausführungsform der Erfindung zusätzlich die Umfangsgeschwindigkeit der umlaufenden Aufhackvorrichtung 5 automatisch, rechnergestützt durchflußabhängig gesteuert werden.

Ferner ist in Fig. 1 ein dritter, punktiert dargestellter Regelkreis zwischen der Trübungsmessung TDO und der Drehzahlregelung SIC der Antriebsvorrichtung 3 für die Welle 6 der Aufhackvorrichtung 5 vorgesehen. Dieser Regelkreis TDO-SIC gestattet nach einer vorteilhaften Ausgestaltung der Erfindung eine Regelung der Umfangsgeschwindigkeit der umlaufenden Aufhackvorrichtung 5 in Abhängigkeit von den ermittelten Trübungswerten.

Aus dem Vorstehenden geht hervor, daß gemäß Fig. 1 das Anheben bzw. Absenken der Aufhackvorrichtung in Abhängigkeit vom Durchfluß der Läuterwürze durch den Würzeablauf automatisch geregelt wird und daß zusätzlich über die beiden punktiert dargestellten Regelkreise FQC-SIC sowie TDO-SIC die Umfangsgeschwindigkeit der Aufhackvorrichtung durchflußabhängig bzw. trübungsabhängig gesteuert werden kann.

Dabei werden besonders vorteilhafte Ergebnisse erzielt, wenn beim Absenken der Aufhackmaschine deren Umfangsgeschwindigkeit gesteigert wird, aber beim Anheben der Aufhackmaschine deren Umfangsgeschwindigkeit herabgesetzt wird. Hat sich ein optimaler Durchfluß eingestellt, so kann in Abhängigkeit von der bei TDO gemessenen Trübung die Umfangsgeschwindigkeit der Aufhackvorrichtung solange vermindert werden, bis keine weitere Verbesserung der Trübungswerte mehr erreicht werden kann. Hat sich ein maximaler Durchfluß und eine minimale Trübung eingestellt, so wird die Umfangsgeschwindigkeit der Aufhackvorrichtung so weit herabgesetzt, wie dieses ohne Beeinträchtigung der Durchfluß- und Trübungswerte möglich ist.

Gemäß Fig. 2 erfolgt die Steuerung des Anhebens bzw. Absenkens der Aufhackvorrichtung 5 nicht in Abhängigkeit vom Durchfluß (Fig. 1), sondern in Abhängigkeit vom gemessenen Differenzdruck Δp, d.h. in Abhängigkeit vom gemessenen Treberwiderstand. Zu diesem Zweck ist ein Regelkreis zwischen der Ermittlungstelle des Differenzdrucks und der Stellungsanzeige GIC des Antriebes für die Hub- und Senkvorrichtung 4 der Aufhackvorrichtung vorgesehen. Mit Hilfe dieses Regelkreises Δp-GIC wird das Anheben bzw. Absenken der Aufhackvorrichtung in Abhängigkeit vom gemessenen Differenzdruck Δp automatisch geregelt.

Damit bei der in Fig. 2 erläuterten Ausführungsform nicht nur das Anheben bzw. Absenken der Aufhackvorrichtung automatisch differenzdruckabhängig geregelt wird, sondern auch die Umfangsgeschwindigkeit der umlaufenden Aufhackvorrichtung automatisch regelbar ist, ist ein in Fig. 2 punktiert dargestellter Regelkreis Δp-SIC vorgesehen, mit dessen Hilfe die Drehzahl der Antriebswelle 6 der Aufhackvorrichtung steuerbar ist. Dabei hat es sich als vorteilhaft herausgestellt, beim Absenken der Aufhackvorrichtung eine größere Umfangsgeschwindigkeit der Aufhackvorrichtung vorzusehen und beim Anheben der Aufhackvorrichtung die Umfangsgeschwindigkeit zu vermindern.

Ein in Fig. 2 punktiert dargestellter weiterer Regelkreis TDO-SIC entspricht dem gleichbezeichneten Regelkreis TDO-SIC in Fig. 1. Dieser letztgenannte Regelkreis gestattet es, nach Erreichen eines optimalen Durchflusses bzw. eines optimalen Differenzdruckes in Abhängigkeit von den ermittelten Trübungswerten die Umfangsgeschwindigkeit der Aufhackvorrichtung soweit herabzusetzen, bis durch weiteres Herabsetzen keine Verbesserung der Trübungswerte mehr erreicht werden kann.

Mit Hilfe der auf die Umfangsgeschwindigkeit der Aufhackmaschine einwirkenden Regelkreise ist sichergestellt, daß beim Erreichen optimaler Werte für Durchfluß bzw. Differenzdruck und Trübung die Umfangsgeschwindigkeit der Aufhackvorrichtung auf ein die optimalen Werte nicht beeinträchtigendes Minimum herabgesetzt werden kann. Gleichzeitig wird mit Hilfe der auf die Hub- und Senkvorrichtung 4 der Aufhackvorrichtung einwirkenden Regelkreise die Aufhackvorrichtung auf einen optimalen Wert angehoben bzw. abgesenkt.

Der bereits erwähnte frequenzgeregelte Antrieb der Aufhackvorrichtung ermöglicht eine optimale Umfangsgeschwindigkeit, die mit der Qualität von Schrot und Malz einhergeht. Die Umfangsgeschwindigkeiten liegen im Bereich von 0,8 bis 2,5 m/min Umlauf.

Die Aufhackvorrichtung fährt nicht wie in den Anfangszeiten des kontinuierlichen Läuterns zwangsweise auf und ab, sondern rechnergestützt differenzdruck- bzw. durchflußabhängig stufenlos nach unten bzw. nach oben. Bei fallendem Durchfluß reagiert die Aufhackvorrichtung sofort, um beim "Abfangen" des Durchflusses in der zuletzt erreichten Position zu verharren und wieder in die vorherige Ausgangsposition zurückzukehren, wenn durch den ständig erfolgenden Vergleich zwischen Soll- und Istwerten von Durchfluß bzw. Differenzdruck der Sollwert wieder erreicht worden ist.

Diese Arbeitsweise läßt die Aufhackvorrichtung in einer Art kontrolliertem "Auf und Ab" arbeiten, ohne aber die Läuterwürze einzutrüben und die Filterschicht zu stören. Zugleich wird die Treberschicht dabei so locker gehalten, daß ein Tiefschnitt mit allen seinen Nachteilen, wie Trübung usw., nicht mehr nötig ist. Sollte sich jedoch beispielsweise die Malzqualität geändert haben und ein Zwangsaufhacken absolut nötig sein, so wird die Aufhackvorrichtung nach vorgegebenen Kriterien in ihre tiefste Position gefahren und konventionell aufgehackt. Diese Möglichkeit ist aber die Ausnahme für außergewöhnliche Betriebsfälle, wie erhöhte Viskosität bei z.B. schlechter oder ungenügender Verzuckerung.

Beim Durchführen des erfindungsgemäßen Verfahrens wird aufgrund von Erfahrungswerten ein Sollwert für den Durchfluß bzw. den Differenzdruck vorgegeben. Kommt es im Betriebsablauf zu Abweichungen der Istwerte von den Sollwerten, so reagiert die Aufhackvorrichtung erfindungsgemäß sofort auf solche Abweichungen und fährt automatisch in eine höhere bzw. tiefere Position, bis der Istwert wieder zum Sollwert zurückgekehrt ist.

Solange die ermittelten Istwerte gleich den Sollwerten sind, befindet sich die Aufhackvorrichtung in ihrer Ruhestellung. Dabei läuft das erfindungsgemäße Verfahren derart ab, daß große Abweichungen der Istwerte vom Sollwert große Änderungen der Höhenposition der Aufhackvorrichtung zur Folge haben, während kleinere Abweichungen entsprechend kleinere Veränderungen der Höhenposition zur Folge haben.

Wie bereits erwähnt, ergibt sich eine besonders vorteilhafte Ausgestaltung des erfindungsgemäßen Verfahrens, wenn während des Absenkens der Aufhackvorrichtung die Umfangsgeschwindigkeit der Aufhackmaschine gesteigert wird. Umgekehrt ergibt sich eine vorteilhafte Ausgestaltung, wenn die Umfangsgeschwindigkeit der Aufhackvorrichtung beim Anheben auf eine geringere Geschwindigkeit eingestellt wird.

Wird der Differenzdruck als Bezugsgröße verwendet, so gilt, daß bei Gleichheit der ermittelten Drücke (Differenz = 0) ein optimaler Durchfluß herrscht. Ist jedoch der ermittelte Differenzdruck größer als ein vorgegebener Wert, so ist der Durchfluß gestört, was beim erfindungsgemäßen Verfahren gemäß der in Fig. 2 der dargestellten Ausführungsform eine entsprechende automatische Ansteuerung der Höhenposition der Aufhackvorrichtung zur Folge hat.

Beim erfindungsgemäßen Verfahren erfolgt die Regelung der Höhenposition der Aufhackvorrichtung adaptiv, d.h., es ist nicht einem bestimmten Durchflußwert bzw. einem bestimmten Differenzdruck eine bestimmte Höhenposition der Aufhackvorrichtung zugeordnet. Beim erfindungsgemäßen Verfahren fährt statt dessen, beispielsweise bei einer Verringerung des Durchflusses, die Aufhackvorrichtung so weit in Richtung Läuterbottichboden, bis der gewünschte Differenzdruck wieder erreicht ist. Dieses erfolgt durch einen ständigen Vergleich zwischen Soll- und Istwert von Durchfluß bzw. Differenzdruck. Ist der Sollwert wieder erreicht, so kehrt dann die Aufhackvorrichtung automatisch gesteuert wieder in eine höhere Position, beispielsweise ihre Ausgangsposition, zurück, sofern dadurch die Durchflußwerte bzw. Differenzdruckwerte nicht verschlechtert werden.

Ist, wie bereits erwähnt, ein optimaler Durchfluß erreicht worden, so wird automatisch in Abhängigkeit von der gemessenen Trübung die normale Umfangsgeschwindigkeit (stufenweise) weiter reduziert und zwar so lange, bis sich die Trübungswerte nicht mehr verbessern lassen und ein vorgegebener Mindestwert der Umfangsgeschwindigkeit nicht unterschritten wird.

Mithin folgt die erfindungsgemäße Regelung der Höhenposition der Aufhackvorrichtung dem Prinzip, die Aufhackvorrichtung immer so hoch wie ohne Beeinträchtigung des Durchflusses bzw. des Differenzdruckes möglich zu positionieren. Dieses Prinzip wirkt sich äußerst vorteilhaft auf die Blankheit der Kürze aus, bei deren Feststoffgehalt um so niedriger liegt, je weniger tief die Messer der Aufhackvorrichtung in die Treberschicht einschneiden.

Aus dem Vorstehenden ergibt sich, daß beim erfindungsgemäßen Verfahren bei fallendem Durchfluß die Höhenposition der Aufhackvorrichtung so gesteuert wird, daß beim sogenannten Abfangen des Durchflusses die Aufhackvorrichtung in ihrer zuletzt erreichten Position verharrt, um nach einer vorgegebenen Verweilzeit wieder in ihre Ausgangsposition zurückzukehren.

Zu unterstreichen ist noch, daß beim Verfahren nach der Erfindung der Sollwert für den Durchfluß und/oder für den Differenzdruck zeitabhängig variiert, vorzugsweise kontinuierlich und im Zusammenhang mit dem übrigen Ablauf des Abläuterns variiert wird. Wird z.B. kontinuierlich abgeläutert, so wird normalerweise die Vorderwürze - ohne Wasserzufuhr - bis zum Trockenlaufen der Treber abgeleitet, anschließend wird das Anschwänzwasser kontinuierlich, entsprechend der abgelaufenen Würze, nachgegeben. Der Sollwert für den Durchfluß und/oder den Differenzdruck kann z.B. bei Beginn des Ablaufes der Vorderwürze einen anderen Wert haben wie am Ende. Ferner kann während des Nachgießens ein anderer Sollwert für den Durchfluß und/oder den Differenzdruck gewählt werden als während des Ablaufs der Vorderwürze. Wie erwähnt, werden beim erfindungsgemäßen Verfahren die Sollwerte für die jeweiligen Betriebsstufen aufgrund von Erfahrungswerten vorgegeben.

Da als Folge der erfindungsgemäßen kontinuierlich automatisch geregelten Auflockerung der Treberschicht - von Ausnahmefällen abgesehen - auf ein Aufhacken der Treberschicht im Tiefschnitt verzichtet werden kann, kommt es nicht zu einer übermäßigen Verdichtung der Treberschicht, was die erforderliche Läuterzeit verkürzt.

Durch dieses Verkürzen der Läuterzeit zusammen mit dem Verzicht auf Störungen der Filterschicht wird der Glattwasseranfall beim Läutern vermindert.

Für die Höhenbewegung der Aufhackvorrichtung ist ein bestimmter Bereich eingegrenzt. Der untere Grenzwert liegt soweit oberhalb des Läuterbodens (Senkbodens), daß die dort ruhende Filterschicht nicht erreicht wird, während der obere Grenzwert der Höhenbewegung so gewählt ist, daß die Aufhackmesser gerade noch innerhalb der Treberschicht arbeiten. Mithin befinden sich die Aufhackmesser in der tiefsten Arbeitsstellung der Aufhackvorrichtung immer innerhalb der Treberschicht.

Aus der vorstehenden Beschreibung des erfindungsgemäßen Verfahrens geht hervor, daß gemäß der Erfindung die Höhenposition der in einem Läuterbottich umlaufenden Aufhackvorrichtung in Abhängigkeit vom Durchfluß bzw. in Abhängigkeit vom Differenzdruck automatisch geregelt wird. Die Regelung erfolgt derart, daß bei einem Absinken des Durchflusses bzw. bei einem Ansteigen des Differenzdruckes die Aufhackvorrichtung in eine tiefere Stellung, hingegen beim Ansteigen des Durchflusses bzw. beim Absinken des Differenzdruckes in eine höhere Stellung gefahren wird, wobei Richtung und Ausmaß der Vertikalbewegung der Aufhackvorrichtung automatisch und rechnergestützt so vorgenommen werden, daß hinsichtlich Durchfluß bzw. hinsichtlich Differenzdruck ein Optimum angestrebt wird.

Der Läutervorgang kann noch weitergehend dadurch optimiert werden, daß, wie anhand der Figuren 1 und 2 beschrieben, beim Absenken bzw. Abheben der Aufhackvorrichtung die vorgegebene (minimale) Umfangsgeschwindigkeit (Drehzahl) der Aufhackvorrichtung erhöht bzw. vermindert wird.

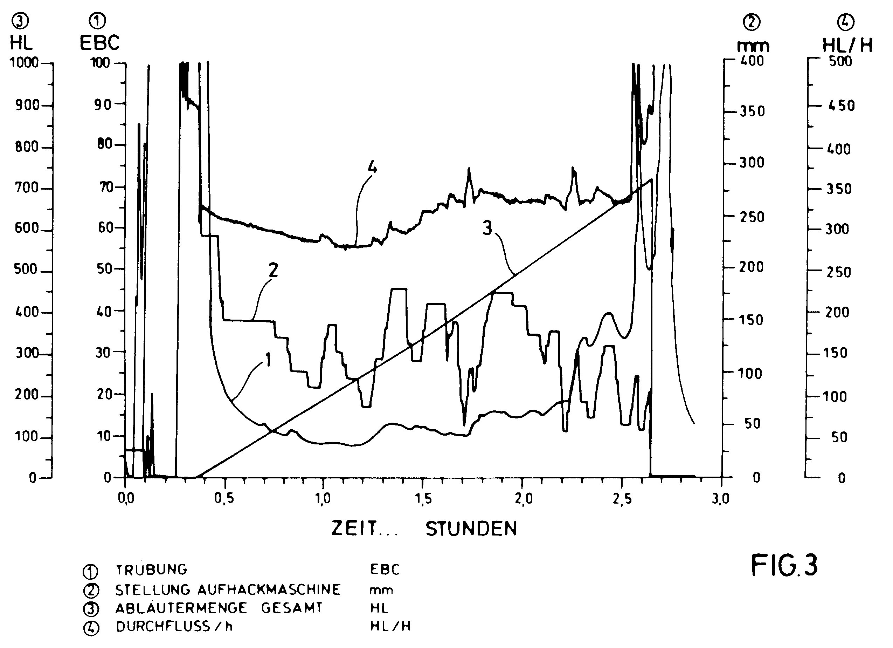

Fig. 3 zeigt ein graphisches Schaubild, in dem vier Parameter der Abläuterung, nämlich
1. die Trübung,
2. die Stellung der Aufhackmaschine,
3. die Gesamtabläutermenge und
4. der gemessene Durchfluß
über die Zeit aufgetragen sind.

In diesem Schaubild bezeichnet die Kurve 1 die Trübung (EBC), und bezeichnet die Kurve 2 die Stellung der Aufhackmaschine (mm). Die Kurve 3 bezeichnet die Gesamtabläutermenge (hl), und die Kurve 4 bezeichnet den Durchfluß (hl/h). Links vom Schaubild gibt die Skala 1 die EBC-Werte für die Trübung wieder, und gibt die Skala 3 die Gesamtabläutermenge (hl) wieder. Rechts von dem Schaubild bezeichnet die Skala 2 die Höhenposition der Aufhackmaschine (mm), und bezeichnet die Skala 4 den Durchfluß (hl/h).

Aus Fig. 3 ist gut zu erkennen, wie die Aufhackvorrichtung in bezug auf ihre Höhenstellung (Kurve 2) Änderungen in den Durchflußwerten (Fig. 4) folgt. Besonders beachtenswert ist jedoch, daß die die Gesamtabläutermenge wiedergebende Kurve 3 praktisch ohne Knicke und ohne Haltepunkte ist, woraus sich ergibt, daß es beim Läuterprozeß keine Unterbrechungen gegeben hat. Insbesondere ist darauf zu verweisen, daß selbst dann, wenn sich die Aufhackvorrichtung auf besonders tiefen Arbeitsstellungen befindet, keine Unterbrechung des Läutervorganges auftritt.

Zusammenfassend ergibt sich aus den in Fig. 3 angegebenen Läuterkurven, daß die der vorliegenden Erfindung zugrundeliegende Aufgabe durch das erfindungsgemäße Verfahren gelöst worden ist.

## Patentansprüche

1. Verfahren zum Betreiben einer Aufhackvorrichtung in einem Läuterbottich bei der Biererzeugung, bei welchem die umlaufende Aufhackvorrichtung gesteuert angehoben bzw. abgesenkt wird,
**dadurch gekennzeichnet**, daß
die Aufhackvorrichtung während des Läutervorgangs kontinuierlich umläuft und dabei die Höhenposition der Aufhackvorrichtung automatisch so eingeregelt wird, daß der Läutervorgang optimal verläuft, wobei die Steuerung der Höhenbewegung bzw. der Höhenposition der umlaufenden Aufhackvorrichtung in Abhängigkeit vom Geschehen im Läuterbottich gesteuert wird, wobei das Anheben bzw. Absenken der Aufhackvorrichtung in Abhängigkeit vom Durchfluß der Läuterwürze durch den Würzeablauf oder in Abhängigkeit vom Differenzdruck geregelt wird.

2. Verfahren nach Anspruch 1,
dadurch **gekennzeichnet,**
daß die automatische Regelung des Anhebens bzw. Absenkens der Aufhackvorrichtung rechnergestützt durchgeführt wird.

3. Verfahren nach einem der Ansprüche 1 bis 2,
dadurch **gekennzeichnet,**
daß beim Anheben bzw. Absenken der Aufhackvorrichtung die Umfangsgeschwindigkeit der Aufhackvorrichtung automatisch geregelt wird.

4. Verfahren nach Anspruch 3,
dadurch **gekennzeichnet,**
daß die Aufhackvorrichtung beim Absenken mit gesteigerter Umfangsgeschwindigkeit gefahren wird und daß die Aufhackvorrichtung beim Anheben mit herabgesetzter Umfangsgeschwindigkeit gefahren wird.

5. Verfahren nach Anspruch 3,
dadurch **gekennzeichnet,**
daß nach Erreichen eines maximalen Durchflusses die Umfangsgeschwindigkeit der Aufhackvorrichtung in Abhängigkeit von den ermittelten Trübungswerten solange herabgesetzt wird, bis keine Verbesserung der Trübungswerte mehr zu erreichen ist.

6. Verfahren nach Anspruch 3 oder 5,
dadurch **gekennzeichnet,**
daß beim Erreichen eines maximalen Durchflusses und einer minimalen Trübung die Umfangsgeschwindigkeit der Aufhackvorrichtung soweit herabgesetzt wird, wie ohne Beeinträchtigung der Durchfluß- und Trübungswerte möglich.

7. Verfahren nach Anspruch 6,
dadurch **gekennzeichnet,**
daß mit dem Herabsetzen der Umfangsgeschwindigkeit die Aufhackvorrichtung soweit wie möglich angehoben wird.

## Claims

1. Process for operating a raking device in a clarifying vat during beer production, in the case of which process the rotating raking device is raised and lowered in a controlled manner, characterized in that the raking device rotates continuously during the clarifying operation and, in this arrangement, the vertical position of the raking device is automatically adjusted such that the clarifying operation runs in an optimum manner, the control of the vertical movement and the control of the vertical position of the rotating raking device being controlled in dependence on what happens in the clarifying vat, the raising or lowering of the raking device being controlled in dependence on the throughflow of the wort through the wort discharge or in dependence on the differential pressure.

2. Process according to Claim 1, characterized in that the automatic control of the raising or lowering of the raking device is carried out in a computer-assisted manner.

3. Process according to one of Claims 1 to 2, characterized in that, upon raising or lowering of the raking device, the circumferential speed of the raking device is controlled automatically.

4. Process according to Claim 3, characterized in that, upon lowering, the raking device is run at an increased circumferential speed, and in that, upon raising, the raking device is run at a reduced circumferential speed.

5. Process according to Claim 3, characterized in that after achieving a maximum throughflow, the circumferential speed of the raking device is reduced in dependence on the turbidity values determined, until improvements of the turbidity values can no longer be achieved.

6. Process according to Claim 3 or 5, characterized in that, upon achieving a maximum throughflow and minimal turbidity, the circumferential speed of the raking device is reduced as far as is possible without impairing the throughflow and turbidity values.

7. Process according to Claim 6, characterized in that, with the reduction in the circumferential speed, the raking device is raised as far as possible.

## Revendications

1. Procédé de commande d'un dispositif de piochage de drêches à l'intérieur d'une cuve à filtration pour la fabrication de la bière, dans lequel le dispositif de piochage de drêches en rotation est relevé ou abaissé de manière commandée, **caractérisé en ce** que le dispositif de piochage tourne en continu pendant le processus de clarification et que la position en hauteur du dispositif de piochage est alors réglée automatiquement de telle façon que le processus de clarification se déroule de manière optimale, la commande du mouvement et respectivement de la position en hauteur du dispositif de piochage en rotation se faisant en fonction des événements à l'intérieur de la cuve à filtration et la montée et respectivement la descente du dispositif de piochage étant réglées en fonction du débit du moût de clarification par l'écoulement de moût ou en fonction de la pression différentielle.

2. Procédé selon la revendication 1, caractérisé en ce que le réglage automatique de la montée et respectivement de la descente du dispositif de piochage est assisté par ordinateur.

3. Procédé selon l'une des revendications 1 ou 2, caractérisé en ce que lors de la montée et respectivement de la descente du dispositif de piochage, la vitesse circonférentielle dudit dispositif de piochage est réglée automatiquement.

4. Procédé selon la revendication 3, caractérisé en ce que lors de la descente, le dispositif de piochage tourne à une vitesse circonférentielle accrue, et que sa vitesse circonférentielle est réduite lors de la montée.

5. Procédé selon la revendication 3, caractérisé en ce que, après l'atteinte d'un débit maximum, la vitesse circonférentielle du dispositif de piochage est diminuée en fonction des valeurs de trouble déterminées jusqu'à ce qu'il ne soit plus possible d'obtenir une amélioration supplémentaire des valeurs de trouble.

6. Procédé selon l'une des revendications 3 ou 5, caractérisé en ce que, dès l'atteinte d'un débit maximum et d'un trouble minimum, la vitesse circonférentielle du dispositif de piochage est diminuée dans la mesure où cela est possible sans affecter les valeurs de débit et de trouble.

7. Procédé selon la revendication 6, caractérisé en ce que le dispositif de piochage est relevé au maximum au fur et à mesure que la vitesse circonférentielle décroît.
